# EUROPEAN PATENT SPECIFICATION

(11) **EP 2 306 759 B1**
(45) Date of publication and mention of the grant of the patent: **29.10.2014**
(21) Application number: 09305944.2
(22) Date of filing: 05.10.2009
(51) Int. Cl.: H04W 8/26, H04L 29/12

(54) **Remote access to a LAN**
Fernzugriff auf ein LAN
Accès distant à un LAN

(43) Date of publication of application: 06.04.2011
(73) Proprietor: Mitsubishi Electric R&D Centre Europe B.V., 1119 NS Schiphol Rijk Amsterdam (NL); Mitsubishi Electric Corporation, Chiyoda-ku Tokyo 100-8310 (JP)
(72) Inventor: Mentre, David, 35708, RENNES Cédex 7 (FR); Rollet, Romain, 35590, L'HERMITAGE (FR)
(74) Representative: Cabinet Plasseraud

(56) References cited:
- NEC: "Local GW based Architecture" 3GPP DRAFT; S2-096015, no. Kyoto; 20090904, 31 August 2009 (2009-08-31), XP050397318 [retrieved on 2009-09-06]
- NEC: "Support of operator control for SIPTO/LIPA traffic" 3GPP DRAFT; S2-095291, no. Kyoto; 20090904, 31 August 2009 (2009-08-31), XP050396780 [retrieved on 2009-08-25]
- NOKIA SIEMENS NETWORKS ET AL: "IP connectivity issues in Local IP access" 3GPP DRAFT; S2-095547(LOCAL_IP_ACCESS_IP_CONNECTIVITY) VB, no. Kyoto; 20090904, 31 August 2009 (2009-08-31), XP050396986 [retrieved on 2009-08-25]
- "3rd Generation Partnership Project; Technical Specification Group Services and System Aspects; Service requirements for Home NodeBs and Home eNodeBs (Release 10)" 3GPP STANDARD; 3GPP TS 22.220, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.0.0, 1 September 2009 (2009-09-01), pages 1-22, XP050361159

## Description

### 1. Technical Field

The present invention relates generally to a mobile network and, more particularly, to an access to an external network from this mobile network.

### 2. Related Art

LTE (for 'Long Term Evolution') architecture defines a mobile network architecture (3GPP for 'Third Generation Partnership Project', Release 9).

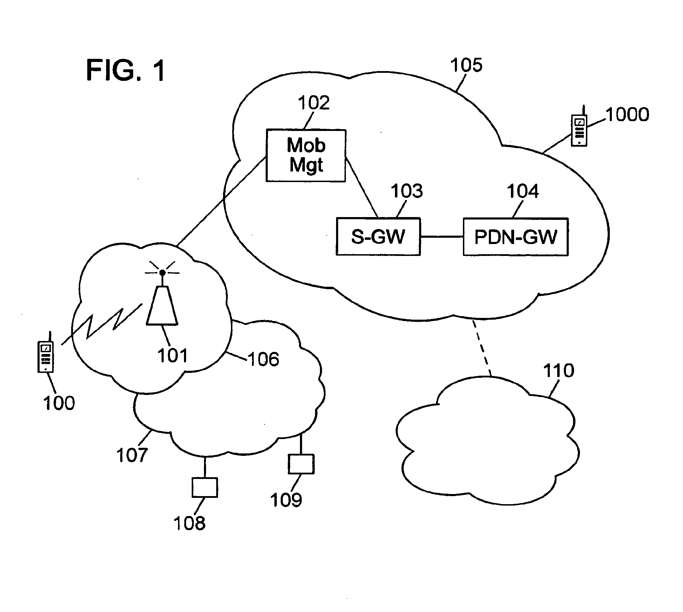

Figure 1 illustrates a network according to this type of architecture. In this network, a control plane and a data plane are handled separately. It comprises a core network part 105 and a home network part 106. The core network 105 includes a Mobility Management Entity 102 (MME), a Serving Gateway 103 (S-GW) and a Packet Data Network Gateway 104 (PDN-GW). The PDN-GW 104 can be linked to an internet network 110 which can comprise a server 111. The home network 106 includes a home NodeB 101. This home NodeB 101 allows a terminal, or UE (for 'User Equipement'), accessing to a LAN (for 'Local Access Network') 107.

A remote UE 1000 can communicate through the core network 105 with a local UE, meaning an UE localised in the home network 106. Moreover, in this type of architecture, a local UE can communicate with LAN devices through the home NodeB 101.

But, it is complex to allow a remote UE 1000 to communicate with a LAN device. Indeed, generally, the home NodeB is not accessible from a device which is not in the mobile network. Indeed, a home NodeB is not a termination point of a communication. Consequently, it is complex to make a device, which is external to home network, able to communicate with a LAN device.

Some network solutions propose to offer to a remote UE an access to LAN devices. But, this type of solution is based on the fact that the home NodeB is able to handle a packets routing at the control plane level as it is described for instance in the document TSG SA WG2 Meeting #72 TD S2 092355, Nortel, April 2009. For that purpose, some functional parts of the (SERVING ENTITY) Mobility Management Entity 102 are introduced in the home NodeB 101. In this case, such a home NodeB should become a complex network entity, with more intelligence proceedings, and then it can be expensive.

The document NEC: *"*Local GW based Architecture" 3GPP DRAFT; S2-096015, no. Kyoto; 20090904, 31 August 2009 (2009-08-31), XP050397318 describes an architectural extension of 3 GPP standardized architecture.

The document NEC: *"*Support of operator control for SIPTOILIPA traffic" 3GPP DRAFT; S2-095291, no. Kyoto; 20090904, 31 August 2009 (2009-08-31), XP050396780 describes a solution to enable operations to have full control on which IP connections/flows should be subject to SIPTO/LIPA and which are not.

The document NOKIA SIEMENS NETWORKS et al.: "IP connectivity issues in Local IP access" 3 GPP DRAFT; S2-095547 (LOCAL_IP_ACCESS_IP CONNECTIVITY)VB, no. Kyoto; 20090904, 31 August 2009 (2009-08-31), XP050396986 describes IP connectivity related issues in Local IP Access services.

The document "3rd Generation Partnership Project; Technical Specification Group Services and System Aspects; Service requirements for Home NodeBs and Home eNodeBs (Release 10)" 3GPP STANDARD; 3GPP TS 22.220, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, no. V10.0.0, 1 September 2009 (2009-09-01), pages 1-22, XP050361159 describes service requirements for Home NodeBs and Home eNodeBs.

In view of the foregoing, there is a need for enhancing an external access to a LAN in such network architecture.

### SUMMARY OF THE INVENTION

A first aspect of the present invention proposes a method for handling a communication between a terminal of a mobile network and a device of a LAN network,
the mobile network having a core network and a home network including a home NodeB;
said LAN network being linked to the home network via said home Node B;
the terminal being a remote terminal from the home network;
said method comprising the following steps at the home NodeB:
/a/ upon activation of a bearer, obtaining one core network IP address of the home NodeB dedicated to said bearer;
/b/ obtaining a LAN IP address for said bearer;
/c/ storing in an initial table an association of the bearer, the core network IP address obtained at step /a/ and the LAN IP address obtained at step /b/.

A remote terminal in a mobile network, comprising a core network and a home network, corresponds to a terminal which is not in the home network but it is remote from the home network. In LTE architecture for instance, such a remote terminal can communicate with a terminal located in the home network through the core network.

The considered communication can be based on TCP/UDP/IP protocols for instance.

In this network, when the home NodeB activates a bearer, one core network IP address is allocated for this activated bearer. Thus, the home NodeB can become a termination point of the network for an IP packets stream. Indeed, as the activated bearer is mapped to one core network IP address of the home NodeB, it is possible to send an IP packets stream through the core network of the mobile network. Moreover, as the activated bearer is also mapped to one LAN IP address of the home NodeB, it is also possible to forward this packets stream received from the core network towards the LAN.

Thanks to these characteristics, the home NodeB can become a kind of gateway in the considered architecture, since the home NodeB is then able to receive an IP packets stream through the core network and to forward this stream toward the LAN. Based on an association between a bearer on core network, a core network IP address and a LAN IP address for this bearer, a link can be ensured between the core network and the LAN network through a home NodeB according to one embodiment of the present invention. In the following, a TCP/UDP port can be referred as 'IP port' or as 'port' only, without changing the meaning of the terms.

The method for handling a communication can further comprises the following steps:
/1/ obtaining one LAN IP address and LAN IP port of at least said device; and
/2/ obtaining at least one core network IP port of the home NodeB;
/3/ storing in a first table an association of the LAN IP address and port of the device with said core network IP port of the home NodeB.

Here, at least one core network IP port is allocated to the NodeB. This characteristic makes a terminal of the mobile network able to send IP packets to the NodeB, even if it is not located in the home network.

Moreover, at the NodeB level, it is planned to handle an association of the core network IP address and core network IP port of the home NodeB with one LAN IP address corresponding to a device in the LAN.

In such conditions, a remote terminal can send an IP packet to the device in the LAN through the home NodeB by using the core network IP address and IP port of the home NodeB.

Indeed, on one hand, an IP packet sent by a remote terminal through the core network is received on the IP address and IP port of the home NodeB, and, on the other hand, this IP port of the home NodeB (or IP port of HNB) is associated to a LAN IP address and port, meaning to a service provided by a LAN device. Thus, an IP packet can be transmitted from a remote terminal through the core network until the LAN device which has an LAN IP address and port mapped to the IP port of the home NodeB indicated as a destination of the IP packet.

For that purpose, upon reception of such IP packet, the home NodeB can determine the LAN IP address and port based on the IP port destination indicated in an IP packet received from a remote terminal.

Thanks to these characteristics, it is easy to allow a communication from a remote terminal to a LAN network in a mobile network architecture, like a LTE network for instance. An existing classical home NodeB can be adapted to allow this type of communication by introducing only minor changes.

In this condition, a service of remote control on LAN device can be advantageously offered even if the user of a terminal is not located in the LAN, while ensuring a level of security regarding the external access to the LAN devices. Indeed, a level of security is ensured by the access of the terminal to the core network. As a remote UE is strongly authenticated in the core network, the home NodeB can trust this authentication and given access to only a predefined set of remote UEs.

Such architecture allows, for instance, a user of a mobile terminal to control a device in his LAN network even when he is not at home. Through such remote control on LAN devices, it is notably possible to take a picture with a mobile terminal, to send the picture through the core network to a printer which is a device in the considered LAN network, and to require the printing of the picture at home in a remote manner.

In one embodiment, the LAN network comprises a plurality of devices and the home NodeB handles the first table storing the association of following information per device in the LAN:
- core network IP port of the home NodeB; and
- LAN IP address and port of said LAN device;
wherein core network IP port being associated to LAN IP address of device on one-to-one basis.

Thus, it is easy to make the home NodeB able to receive IP packets from a remote UE and to forward them to the device of LAN having the IP address which is stored in the first table in association with the IP port indicated in destination field of the received packet.

This first table can be handled statically in a phase of configuration or it can be handled dynamically based on registration of devices to the home NodeB. A protocol like UPnP or Zeroconf (Zero Configuration Networking) can be used for instance.

In a static case, the configuration can be done through a user interface accessible on the home NodeB or it can be done by a Network Operator managing the core network. In a dynamic case, the home NodeB can be considered as an Internet Gateway. In this context, the LAN devices register their relevant information to this Internet Gateway, meaning home NodeB. Then, this relevant information can be used to build the first table. Such relevant information can be NAT information (for 'Network Address Translation'). In the dynamic case, a protocol like UPnP can be advantageously used, on one hand, by the LAN devices to register to the home NodeB and, on the other hand, by the remote terminal which can learn the information of the first table through UPnP protocol.

In one embodiment, upon reception of a first packet of a packet stream on downlink, the following information is stored in a second table:
- an identifier of an associated bearer on which the packet is received;
- a destination IP port indicated in the received packet, as stored in the first table;
- a LAN IP address allocated for said bearer, as stored in the initial table;
- a LAN IP port generated for the home NodeB;
- the LAN IP address of the device associated to the LAN IP port of the home NodeB, as stored in the first table;
- the LAN IP port of the device associated to the LAN IP port of the home NodeB, as stored in the first table;
- the source IP address indicated in the received packet, corresponding to the core network IP address of the remote terminal; and
- the source IP port indicated in the received packet, corresponding to the core network IP port of the remote terminal.

Advantageously, based on this second table, it is possible to forward correctly IP packets received on downlink through the core network by a remote mobile terminal to the correct LAN device.

For that purpose, the following steps are applied on each IP packet received in the packet stream on downlink:
- based on the second table, obtaining a modified IP packet by:
   o replacing respectively source IP address and port indicated in the received packet by LAN IP address and port of the home nodeB; and
   o replacing respectively destination IP address and port indicated in the received packet by LAN IP address and port of the device;
- forwarding the modified IP packet to the LAN.

Thus, it is easy to transmit IP packet stream from a remote UE to a LAN device at the home NodeB level.

In one embodiment, upon reception of an IP packet on uplink, the following steps are carried out:
- based on the second table, selecting the associated bearer;
- discarding said IP packet if no bearer can be selected;
- otherwise, based on initial and second tables, obtaining a modified IP packet by:
   o replacing source IP address by IP address of the home NodeB on the core network (IP_{CN,HNB}) for said given bearer,
   o replacing source IP port by core network IP port of the home NodeB;
   o replacing destination IP address by core network IP address of the remote terminal;
   o replacing destination IP Port by core network IP port of the remote terminal;
forwarding the modified IP packet to the core network in said associated bearer.

In these conditions, the home NodeB is able to forward received IP packets from the LAN towards the core network correctly. Forwarding on uplink is easy to carry out also based on tables stored in memory.

In one embodiment, the remote terminal has been authenticated by the core network beforehand. It is the case generally in a mobile network because a mobile terminal entering a mobile network is controlled before being allowed to communicate. Consequently, a remote control of LAN devices according to one embodiment of the present invention ensures a level of security.

A second aspect of the present invention proposes a processing module adapted to carry out the steps of a method for handling communication according to the first aspect.

A third aspect of the present invention proposes a terminal in a mobile network adapted to communicate with a device of a LAN network,
the mobile network having a core network and a home network including a home NodeB;
said LAN network being linked to the home network via said home Node B;
the terminal being a remote terminal from the home network;
the terminal handling a table similar to the first table handled according to the first aspect of the present invention.

A fourth aspect of the present invention proposes a system for handling a communication between a terminal of a mobile network and a device of a LAN network, said home NodeB comprising a processing module according to the second aspect of the present invention and a terminal according to the third aspect of the present invention.

### BRIEF DESCRIPTION OF THE DRAWINGS

Further features and advantages of the present invention will become more apparent from the description below. This is given purely by way of illustration and should be read in conjunction with the appended drawings, of which:
Figure 1 illustrates an architecture of a mobile network according to a prior art, as already described.
Figures 2-a et 2-b illustrate the main steps performed by a method of packet routing according to one embodiment of the present invention.
Figure 3 illustrates architecture of a mobile network in detail, wherein one embodiment of the present invention can be applied.
Figure 4 illustrates a home network comprising a plurality of home NodeBs.
Figure 5 illustrates different bearers used according to one embodiment of the present invention.
Figure 6 illustrates network architecture according to one embodiment of the present invention.
Figure 7 illustrates a processing module according to one embodiment of the present invention.

### DESCRIPTION OF PREFERRED EMBODIMENTS

The present invention is described herein below in one exemplary application to a LTE architecture of network. But, it is easy to apply the same principles to other types of network.

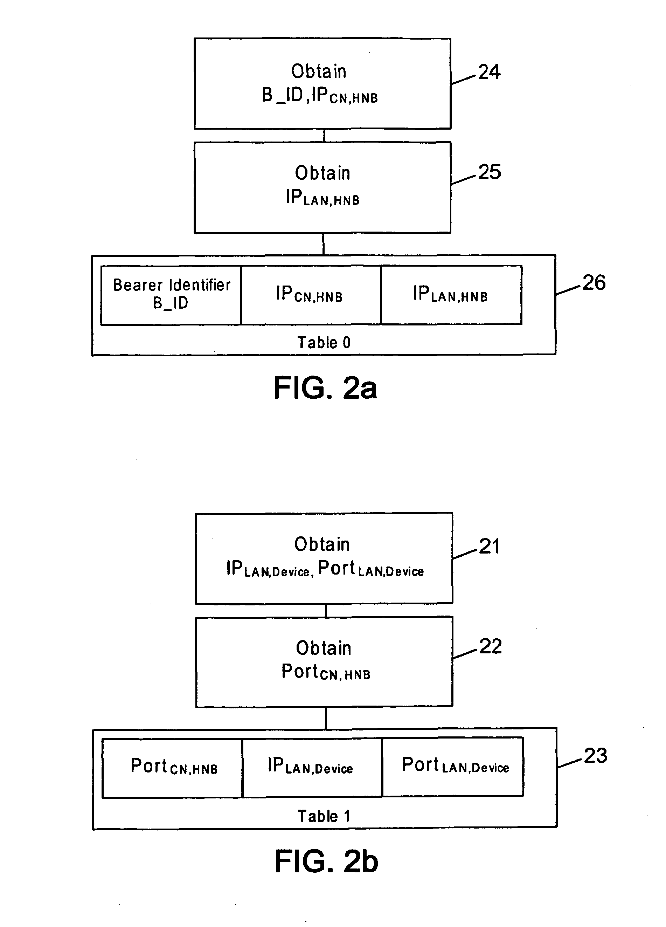

Figure 2a illustrates the main steps performed by a method for handling a communication between a terminal of a mobile network and a device of a LAN network according to one embodiment of the present invention. It is planned to allocate an IP address to a bearer k terminated into the home NodeB, or HNB.

At a step 24, upon bearer activation, the HNB obtains a Bearer Identifier, B_ID, and a core network IP address IP_{CN,HNB}, which will be dedicated to that bearer.

At a step 25, the HNB :
- allocates a LAN IP address I P_{LAN,HNB} for that bearer;
- associates said B_ID and IP_{CN,HNB} with IP_{LAN,HNB}; and
- stores that association in an initial table referred as Table 0.

No limitation is attached to the way used to carry out the steps 24 and 25. In one embodiment, the HNB obtains the IP_{CN,HNB} from the signalling exchanged with the Core Network (CN). The HNB can also select a LAN IP address to be associated to the bearer from a pool of available LAN IP addresses.

In another embodiment, the HNB may initiate a DHCP request to a LAN DHCP server to obtain a valid LAN IP address.

Figure 2b illustrates other steps performed at the home nodeB level by a method for handling a communication according to one embodiment of the present invention.

At step 21, the HNB obtains one LAN IP address IP_{LAN}, device and IP port Port_{LAN}, device of at least one LAN device.

At step 22, the HNB allocates one IP port for oneself, Port_{CN, HNB}, on a one-to-one basis. At step 23, the HNB associates the LAN IP address and IP port of the device with the IP port of the home NodeB. This association is stored in a first table referred as Table 1.

No limitation is attached on the method used to carry out the steps 21 and 22. In one embodiment, the HNB can obtain the LAN IP address and IP port on a device either by an initial configuration phase or, dynamically, during a registration phase of the devices. The HNB may allocate itself the IP Port from a pool of available ports, or by a static configuration done by HNB administration.

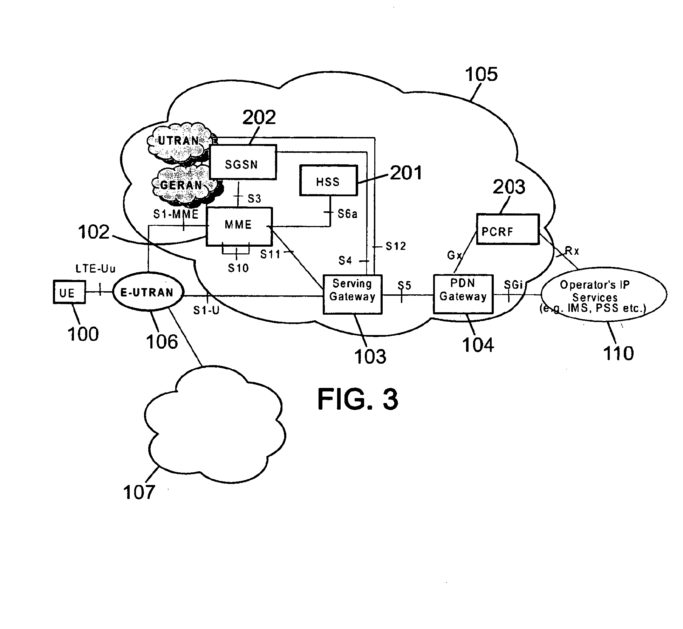

Figure 3 illustrates architecture of a mobile network in detail, wherein one embodiment of the present invention can be applied.

A mobile terminal, or UE for 'User Equipment', can access to the core network 105 via a home network 106. The home network 106 corresponds to E-UTRAN, for 'Evolved Universal Terrestrial Radio Access Network', which is an access part of the network.

This type of architecture is based on a data plane for handling data exchange and on a control plane for handling signalling exchange.

The core network 105 comprises the Mobility Management Entity MME 102, which is a control node in charge of handling mobility and security for mobile terminals (UEs). MME 102 is a contact point for the control plane of the UE. When the UE 100 is moving in the access network, another MME can be involved.

The core network comprises also the Serving Gateway (S-GW) 103, which is the contact point for the data plane of the UE. The Serving Gateway can stay the same even if the UE is moving in the access network.

The core network 105 comprises the PDN Gateway 104, which is a contact point between the mobile network, LTE network, and the Internet network 110. Generally, the PDN GW 104 is in charge of handling IP addresses.

The core network can further comprise a Home Subscriber Server 201 (HSS), which is a central node that mainly contains subscription and parameters information for UEs, and a Serving GPRS Support Node (SGSN) 202, which is in charge of handling data exchange with 3G and GSM networks. This core network can comprise too a Policy and Charging Rules Function 203 (PCRF) in charge of charging sessions handled in this network.

According to LTE standard, the interface:
- between the access network (or home network) 106 and the MME 102 is referred as S1-MME interface;
- between the MME 102 and the SGSN 202 is referred as S3;
- between the MME 102 and the Serving GW 103 is referred as S11;
- between the MME 102 and the HSS 201 is referred as S6a;
- between the SGW 103 and the PDN GW 104 is referred as S5;
- between the PDN GW 104 and the Internet network 110 is referred as SGi:
- between the PDN GW 104 and the PCRF 203 is referred as Gx;
- between the PCRF 203 and the internet network 110 is referred as Rx.

In one embodiment of the present invention, the home NodeB is in charge of handling a communication between the home network 106 and a LAN network 107. Stated otherwise, a terminal located in the home network is able to communicate with a device of the LAN network 107. In addition, a terminal of the mobile network located in the mobile network but outside the home network, can communicate with a device of the LAN network 107 also. Such a mobile terminal is referred as a remote terminal because it is remote from the home NodeB and from the home network.

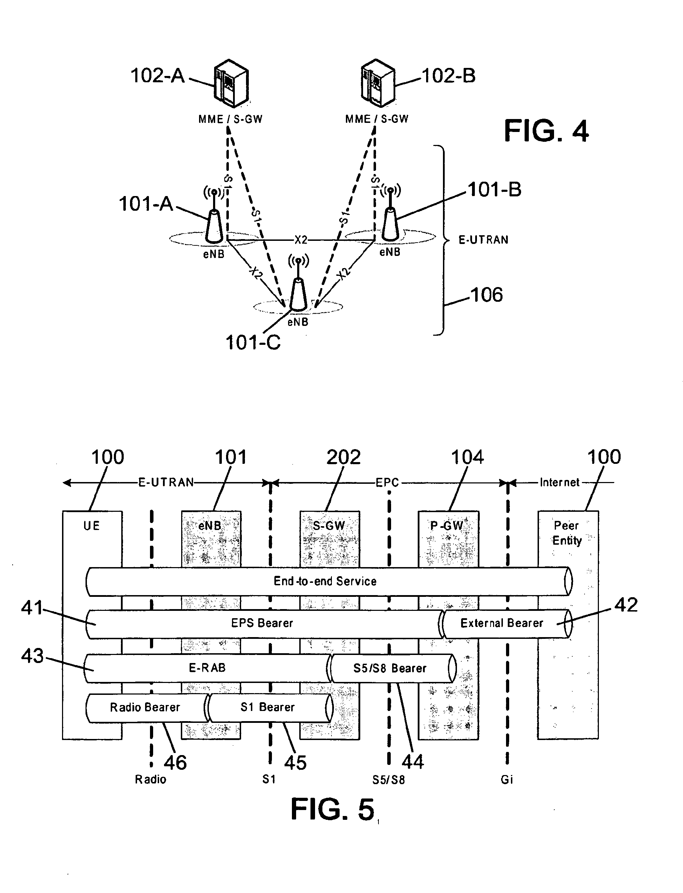

The home network part can contain several home NodeBs. Figure 4 illustrates an E-UTRAN network 106 comprising three home NodeBs 101-A, 101-B and 101-C. The home NodeB 101-A and 101-B are linked to an MME 102-A, and the home NodeB 101-B and 101-C are linked to an MME 102-B.

It will be noted that, generally, Home NodeBs do not implement links of type X2, unlike NodeBs. A plurality of bearers is defined in order to support transmission through the network.

Figure 5 illustrates different bearers which can be used according to one embodiment of the present invention. An end-to-end service between two distant mobile terminals is based on an EPS bearer 41, between UE 100 and the P-GW 104, and an External Bearer 42, between P-GW 104 and the other mobile terminal UE 100.

The EPS bearer 41 is composed of a bearer E-RAB (for 'Evolved Radio Access Bearer') 43 between the UE 100 and the S GW 202, and of a bearer S5/S8 bearer 44, between the S-GW 202 and the P-GW 104.

More precisely, the E-RAB bearer 43 is composed of a Radio bearer 46 between the UE 100 and the home NodeB 101, and of a S1 bearer 45 between the home NodeB and the S-GW 202.

When a UE enters the network, it creates a Default Bearer and potentially zero or more Dedicated Bearers on demand.

In the following, an EPS bearer 41 can be referred as a bearer. Indeed, an EPS bearer makes the home NodeB able to become a termination point of a communication from a remote terminal in the mobile network.

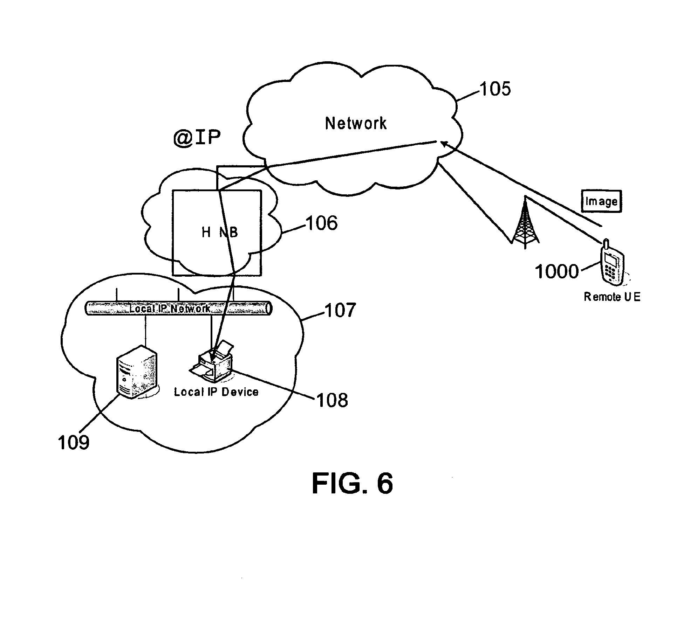

Figure 6 illustrates a network architecture according to one embodiment of the present invention. The network, which is illustrated here, is an example of implementation of the present invention. Of course, it is easy to adapt the main principle to a lot of variants of networks.

The exemplary network illustrated in Figure 4 comprises a home NodeB 101, corresponding to a home radio network 106 not illustrated. It comprises also a Local Area Network LAN 107, wherein some different devices 108 and 109 are connected, like a PC or a printer... Mobile terminals 100 UE in home network 106 can be connected locally to the home NodeB 101.

According to one embodiment of the present invention, it is possible to offer to an UE 1000 an access to the LAN 107 via the core network of the mobile network.

A home NodeB according to one embodiment of the present invention can be considered like a mobile terminal regarding some features on the core network interface. Indeed, at least one IP address, IP_{CN,HNB} is allocated by the core network CN to the default bearer terminated in home NodeB, or HNB, as a classical mobile terminal. Thus, as a mobile terminal, this home NodeB can be reached through an IP address. It is possible to activate several bearers and then, allocate different IP addresses for the HNB, one dedicated for each activated bearer.

When a remote UE wants to access a LAN device in LAN network 107, it can communicate to the home NodeB like to any other UEs. Moreover, this home NodeB handles IP addresses on the LAN side. Indeed, the home NodeB is in charge of mapping a port IP on which an IP packet is received and an IP address and IP port in the LAN network 107, corresponding to a LAN device. In one embodiment of the present invention, there is a correspondence between IP ports of home NodeB, Port_{CN,HNB}, and IP addresses and ports of LAN devices, I PLAN, device and Port_{LAN}, device, on one-to-one basis.

In one embodiment, the home NodeB and the remote UE share the knowledge of association between the IP addresses and ports of the LAN devices (IP_{LAN,device,} Port_{LAN,device}) and the port IP of the home NodeB (Port_{CN,HNB}).

Such association can correspond to the first table 23, which is a configuration translation table, as following:

**Table 1**

| Field #1 | Field #2 | Field #3 |
|---|---|---|
| IP port of home | IP address of a device | IP port of a device |
| NodeB on core network | on LAN network | on LAN network |
| Port_{CN,HNB} | IP_{LAN, device} | Port_{LAN, device} |

Information stored in this type of table is accessible by the remote UE and by the home NodeB.

No limitation is attached to the building and the updating of information stored in the table. For instance, the information can be stored at an initial phase, statically.

In another embodiment, this type of table can be built and updated based on a protocol like a protocol UPnP (Universal Plug and Play) or Zeroconf (Zero Configuration Networking) for instance. In that case, the home NodeB can broadcast an announcement on the LAN as a gateway to a WAN. LAN device, which can offer a particular service to a user, announces to the home NodeB its presence in the LAN network and registers itself to the home NodeB. Each LAN device can provide:
- the LAN IP address of device and LAN IP port of device used by the device on the Local IP Network and to which packets should be forwarded;
- its needs regarding port forwarding, meaning a range of IP ports of the WAN side (i.e. core network side) that should be forwarded on the LAN side.

Based on this announcement, the home NodeB learns the corresponding IP address IP_{LAN}, device and port Port_{LAN}, device and can map this IP address and port to one of its IP port on the Core Network. The home NodeB builds its configuration translation table. On the other hand, a remote UE can learn this table based on the UPnP protocol too. The home NodeB can communicate the information stored in the first table, about the registered LAN devices, to the remote UE. This can be performed by broadcasting an announcement to the remote UE, in a similar way as announcements on the LAN. The user of the considered remote UE can thus advantageously access his devices through the user interface of its terminal, without any need to know configuration details like IP addresses or IP port numbers.

It can be noted that it is possible to activate several bearers terminated into the HNB, and then to have a plurality of IP addresses on the core and LAN networks to the home NodeB, each of them being attached to a bearer, on one-to-one basis.

In this case, it could be useful to store this information in the initial table, table 26 as following:

| | Field #1 | Field #2 | Field #3 |
|---|---|---|---|
| | Bearer identifier | IP address of HNB for that bearer in CN | IP address allocated to that bearer on LAN network |
| | B_ID | IP_{CN,HNB} | IP_{LAN, HNB} |

In addition, in one embodiment of the present invention, the home NodeB handles a second table, forwarding translation table, as following:

| Field1 | Field2 | Field3 | Field4 | Field5 | Field6 | Field7 | Field8 |
|---|---|---|---|---|---|---|---|
| Bearer | IP port of HNB on core network | IP address of HNB on LAN | IP port of HNB on LAN | IP address of device on LAN | IP port of device on LAN | IP address of remote UE on core network | IP port of remote UE on core network |
| B_ID | Port_{CN}, _{HNB} | IP_{LAN}, _{HNB} | Port_{LAN}, _{HNB} | IP_{LAN, device} | POrt_{LAN}, _{Device} | IP_{remoteUE,CN} | Port_{remoteUE,CN} |

These tables store the rules to be applied on IP packets received on downlink, meaning from the core network to the LAN network, and on uplink, meaning from the LAN network to the core network.

Of course, there is no limitation attached to the present invention regarding the way of implementation to associate all these data in order to make the home NodeB able to handle the reception of IP packets from a remote UE.

Sections above detail an implementation based on first and second tables for illustrative purpose only.

Based on these tables, the home NodeB can route correctly IP packets between core network and LAN network.

More precisely, on downlink, the home nodeB can receive an IP packet on the core network interface. This IP packet received on a given bearer, B_IDk indicates:
- the IP address and the port of the remote UE 1000 as source IP address and source IP port respectively;
- the IP address IP_{CN,HNBK} and the IP port Port_{CN,HNB} of the home NodeB as destination IP address and destination port.

Upon reception of this IP packet, source and destination IP addresses and ports are modified by a processing module which can be located at the home NodeB level. Such a modification can be applied by using NAT (Network Address Translation) functionality.

When an IP packet coming from a remote UE reaches the home NodeB, the home NodeB is able to determine which LAN device is targeted and how transfer the IP packet to it, based on the first table.

In one embodiment of the present invention, upon reception of an IP packet on downlink, the home Network determines LAN network destination, if it exists, and forwards the received IP packet. Moreover, upon reception of an IP packet on uplink, the home NodeB determines the corresponding bearer for forwarding the received IP packet, if it exists.

On both ways, forwarding of packets is done using a set of rules, applied one after the other.

On downlink, a rule according to one embodiment, allows to determine an IP destination address and an IP destination port, corresponding to the bearer on which is received the IP packet and the IP port destination, Port_{CN,HNB} of received packet streams. A packet stream is identified by its IP quadruple:
- source IP address, source port, destination address and destination port.

The home NodeB behaviour can be different for the first packet and for other packets of a packet stream.

### First packet of a packet stream

A packet received on a given bearer is determined to be the first received core network packet of a given IP quadruple by a lookup into the second table based on the following information:
- bearer identifier will match field #1
- source address will match field #7
- source port will match field #8
- destination port will match field #2

As the second table is built and updated upon reception of IP packets, if no corresponding entry is found in the second table, this packet is considered as the first packet for this IP quadruple. Otherwise, it is considered as another packet of an already opened packet stream.

For a first packet of a packet stream, a lookup is done in the first table, based on the following information:
- the destination port will match field #1

If a corresponding entry is found in the first table, a new entry is created in the second table; otherwise the packet is dropped, in one embodiment.

When a new entry is created in the second table, a source IP Port on LAN for the home NodeB, Port_{LAN,HNB}, is generated. This source IP Port on LAN Port_{LAN,HNB} is dynamically assigned by the home nodeB so as to be able to correctly forward returned uplink packet, following a NAT mechanism. Once generated, a new entry is added into the second table.

At this step, it is possible to fill the following fields of the second table:
- field 1: the bearer on which the IP packet is received;
- field 2: the destination IP Port indicated in the incoming IP packet (identical to field #1 in the first table)
- field 3: LAN IP address attached to said bearer that can be retrieved from Table 0.
- Field 4: said Port_{LAN,HNB}, generated by the HNB
- fields 5 and 6: IP address and IP port of the LAN device can be retrieved from the first table based on the IP port destination which corresponds to an IP port of the home NodeB;
- field 7 and 8 witch are indicated in the IP packet as IP address and port source.

### Other packets of a packet stream on downlink

For each matched packet, the IP quadruple:
- source IP address of remote UE, source IP port of remote UE, destination CN IP address, destination CN port;
   is rewritten using fields of the matching entry in the second table.:
- source LAN IP address of the home NodeB (field #3)
- source LAN IP port (field #4) of the home NodeB
- destination LAN IP address (field #5) for the device,
- destination LAN IP port (field #6) for the device
which are retrieved from the corresponding entry in the second table.

### Other packets of a packet stream on uplink

The following sections are relating to the uplink treatment applied at the home NodeB level, according to one embodiment.

For each packet received on the LAN interface, a lookup into the second table is performed and the IP quadruple of that packet will match the following information:
- source address will match field #5
- source port will match field #6
- destination address will match field #3
- destination port will match field #4

If that lookup failed, IP packet is not forwarded but simply discarded.

Otherwise, for each matched packet, the IP quadruple is rewritten using fields of the matching entry in the second table:
- Source IP address is replaced by the IP address of the home NodeB on the core network, IP_{CN,HNB} for the considered bearer. For that, we retrieved the IP_{CN,HNB} in Table 0 corresponding to field #1 of the matching entry in the second table.
- Source IP port is replaced by field #2
- Destination IP address is replaced by field #7
- Destination IP Port is replaced by field #8

This IP packet, modified according to one embodiment, is sent on the appropriate bearer, meaning the bearer associated to the quadruple corresponding to the received packet, with following rules.

The destination bearer is determined according to field #1 of the matching entry in the second table.

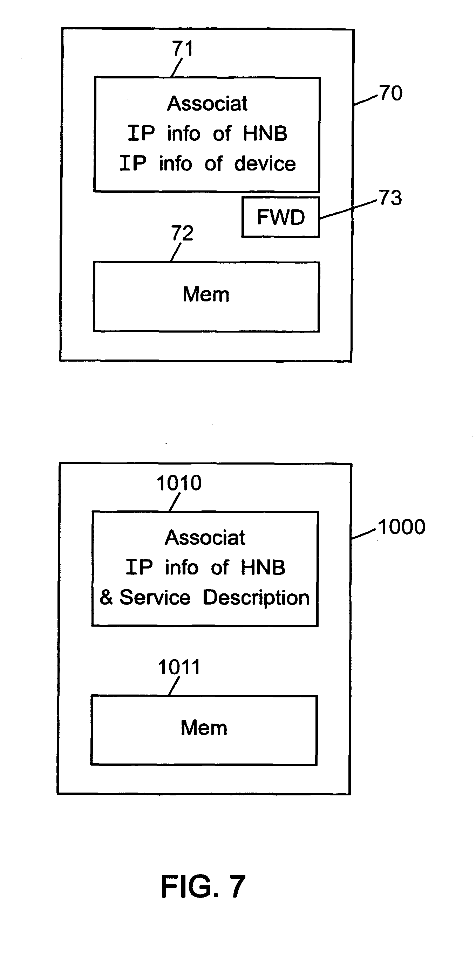

Figure 7 illustrates a processing module according to one embodiment of the present invention.

A processing module 70 comprises:
- a associating unit 71 adapted to :
   upon activation of a bearer, obtain (24) one core network IP address of the home NodeB dedicated to said bearer IP_{CN, HNB};
   allocate a LAN IP address for said bearer IP_{LAN,HNB}; and
- a memory adapted to store in an initial table Table 0 an association of the bearer, the core network IP address and the LAN IP address obtained by the associating unit.

The associating unit can be further adapted to :
- obtain one LAN IP address and LAN IP port of at least said device IP_{LAN,device},and Port_{LAN, device};
- obtain at least one core network IP port of the home NodeB Port _{CN,HNB};
   and the memory can be adapted to store in the first table Table 1 an association of the LAN IP address and port of the device with said core network IP port of the home NodeB.

When the LAN network comprises a plurality of devices, the associating unit 71 obtains core network IP ports of the home NodeB for LAN IP addresses of devices on one-to-one basis; and the memory 72 stores in the first table the association of following information per device in the LAN:
- core network IP address and port of the home nodeB; and
- LAN IP address and port of said device.

In one embodiment, packets being transmitted in the mobile network through respective bearers, the associating unit is adapted to obtain the following information and the memory is adapted to manage a second table to store said information, upon reception of a first packet of a packet stream on downlink:
- an identifier of an associated bearer on which the packet is received;
- a destination IP port indicated in the received packet, as stored in the first table;

- a LAN IP address allocated for said bearer, as stored in the initial table;
- a LAN IP port generated for the home NodeB;
- the LAN IP address of the device associated to the LAN IP port of the home NodeB, as stored in the first table;
- the LAN IP port of the device associated to the LAN IP port of the home NodeB, as stored in the first table;
- the source IP address indicated in the received packet, corresponding to the core network IP address of the remote terminal; and
- the source IP port indicated in the received packet, corresponding to the core network IP port of the remote terminal.

The processing module 70 can further comprise a forwarding unit 73 adapted to handle modification of received packets on downlink as follows:
based on initial, first and second tables, obtaining a modified IP packet by:
   - replacing respectively source IP address and port indicated in the received packet by LAN IP address and port of the home nodeB; and
   - replacing respectively destination IP address and port indicated in the received packet by LAN IP address and port of the device;
   forwarding the modified IP packet to the LAN.

The processing module 70 can further comprise a forwarding unit 73 adapted to handle modification of received packets on uplink as follows:
based on the second table, selecting the associated bearer;
discarding packet if no bearer can be selected; otherwise
based on the second table, obtaining a modified IP packet by:
   - replacing source IP address by IP address of the home NodeB on the core network (IP_{CN,HNB}) for said given bearer,
   - replacing source IP port by core network IP port of the home NodeB;
   - replacing destination IP address by core network IP address of the remote terminal;
   - replacing destination IP Port by core network IP port of the remote terminal; and
forwarding the modified IP packet to the core network in the associated bearer.

In one embodiment of the present invention, a remote terminal 1000 comprises:
- an associating unit (1010) adapted to obtain :
   o at least one core network IP address and one IP port of the home NodeB (IP_{CN, HNB},Port _{CN,HNB}); and
   o a service description provided by the corresponding said LAN device; and
- a memory (1011) adapted to store in a first table an association of the LAN IP address and port of the device with said core network IP port of the home NodeB.

A service description can be obtained by the corresponding LAN device(s) via the HNB. No limitation is attached to the service description. It can be any indication regarding the service offered by a LAN device, as 'printing' for a printer for instance.

Advantageously, in one embodiment of the present invention, as the remote UE is strongly authenticated by the core network, only predefined UE can access to the LAN devices. In this condition, security of LAN devices is ensured.

Moreover, the information about LAN devices are not diffused outside the LAN. Services provided by LAN devices appears like services by the HNB itself, so that, remote UEs do not deal with LAN addresses.

In addition, in one embodiment, two LAN devices controlled by a remote UE have two different IP addresses. This approach avoids breaking any assumption of LAN Devices regarding their remote parties.

## Claims

1. Method for handling a communication between a terminal (1000) of a mobile network and a device (108,109) of a LAN network (107),
the mobile network having a core network (105) and a home network (106) including a home NodeB (101);
said LAN network being linked to the home network via said home Node B;
the terminal being a remote terminal from the home network;
packets being transmitted in the mobile network through at least one bearer, said method comprising the following steps at the home NodeB:
/a/ upon activation of a bearer, obtaining (24) one core network IP address of the home NodeB dedicated to said bearer (IP_{CN}, _{HNB});
/b/ obtaining a LAN IP address for said bearer (IP_{LAN,HNB});
/c/ storing in an initial table (Table 0) an association of the bearer, the core network IP address obtained at step /a/ and the LAN IP address obtained at step /b/.

2. Method for handling a communication according to claim 1, further comprising the following steps:
/1/ obtaining one LAN IP address and LAN IP port of at least said device (IP_{LAN, device},POrt_{LAN, device});
/2/ obtaining at least one core network IP port of the home NodeB (Port _{CN,HNB});
/3/ storing in a first table (Table 1) an association of the LAN IP address and port of the device with said core network IP port of the home NodeB.

3. Method for handling a communication according to claim 2, wherein the LAN network (107) comprises a plurality of devices (108, 109) and wherein the home NodeB (101) handles the first table storing the association of following information per device in the LAN:
- core network IP port of the home nodeB; and
- LAN IP address and port of said device;
wherein core network IP port being associated to LAN IP address of device on one-to-one basis.

4. Method for handling a communication according to claim 2 or 3, wherein the first table is handled dynamically based on registration of devices to the home NodeB (101).

5. Method for handling a communication according to any one of claims 2 to 4, wherein, upon reception of a first packet of a packet stream on downlink, the following information is stored in a second table:
- an identifier of an associated bearer on which the packet is received;
- a destination IP port indicated in the received packet, as stored in the first table;
- a LAN IP address allocated for said bearer, as stored in the initial table;
- a LAN IP port generated for the home NodeB;
- the LAN IP address of the device associated to the LAN IP port of the home NodeB, as stored in the first table;
- the LAN IP port of the device associated to the LAN IP port of the home NodeB, as stored in the first table;
- the source IP address indicated in the received packet, corresponding to the core network IP address of the remote terminal; and
- the source IP port indicated in the received packet, corresponding to the core network IP port of the remote terminal.

6. Method for handling a communication according to claim 5, wherein the following steps are applied on each IP packet received in the packet stream on downlink:
- based on the second table, obtaining a modified IP packet by:
o replacing respectively source IP address and port indicated in the received packet by LAN IP address and port of the home nodeB; and
o replacing respectively destination IP address and port indicated in the received packet by LAN IP address and port of the device;
- forwarding the modified IP packet to the LAN.

7. Method for handling a communication according to any one of the preceding claims, wherein, upon reception of an IP packet on uplink, the following steps are carried out:
- based on the second table, selecting the associated bearer;
- discarding said IP packet if no bearer can be selected;
- otherwise, based on initial and second tables, obtaining a modified IP packet by:
o replacing source IP address by IP address of the home NodeB on the core network (IP_{CN,HNB}) for said given bearer,
o replacing source IP port by core network IP port of the home NodeB;
o replacing destination IP address by core network IP address of the remote terminal;
o replacing destination IP Port by core network IP port of the remote terminal;
forwarding the modified IP packet to the core network in said associated bearer.

8. Method for handling a communication according to any one of the preceding claims, wherein the remote terminal has been authenticated by the core network beforehand.

9. A processing module (70) adapted to be included in a home NodeB in order to handle a communication between a terminal (1000) of a mobile network and a device (108,109) of a LAN network (107),
the mobile network having a core network (105) and a home network (106) including said home NodeB (101);
said LAN network being linked to the home network via said home Node B;
the terminal being a remote terminal from the home network;
said processing module comprising:
- a associating unit (71) adapted to :
upon activation of a bearer, obtain (24) one core network IP address of the home NodeB dedicated to said bearer (IP_{CN, HNB});
obtain a LAN IP address for said bearer (IP_{LAN,HNB}); and
- a memory adapted to store in an initial table (Table 0) an association of the bearer, the core network IP address and the LAN IP address obtained by the associating unit.

10. Processing module (70) according to claim 9, wherein, the associating unit is further adapted to :
- obtain one LAN IP address and LAN IP port of at least said device (IP_{LAN, device},Port_{LAN, device});
- obtain at least one core network IP port of the home NodeB (Port _{CN,HNB});
and the memory is adapted to store in a first table (Table 1) an association of the LAN IP address and port of the device with said core network IP port of the home NodeB.

11. Processing module (70) according to claim 9 or 10, wherein the LAN network comprising a plurality of devices, the associating unit (71) obtains core network IP ports of the home NodeB for LAN IP addresses of devices on one-to-one basis; and
the memory (72) stores in the first table the association of following information per device in the LAN:
- core network IP port of the home NodeB; and
- LAN IP address and port of said device.

12. Processing module (70) according to any one of claims 9 to 11, packets being transmitted in the mobile network through respective bearers, the associating unit is adapted to obtain the following information and the memory is adapted to manage a second table to store said information, upon reception of a first packet of a packet stream on downlink:
- an identifier of a bearer on which the packet is received;
- a destination IP port indicated in the received packet, as stored in the first table;
- a LAN IP address allocated for said bearer, as stored in the initial table;
- a LAN IP port generated for the home NodeB;
- the LAN IP address of the device associated to the LAN IP port of the home NodeB, as stored in the first table;
- the LAN IP port of the device associated to the LAN IP port of the home NodeB, as stored in the first table;
- the source IP address indicated in the received packet, corresponding to the core network IP address of the remote terminal; and
- the source IP port indicated in the received packet, corresponding to the core network IP port of the remote terminal.

13. Processing module (70) according to any one of claims 9 to 12, further comprising a forwarding unit (73) adapted to handle modification of received packets on downlink as follows:
based on initial, first and second tables, obtaining a modified IP packet by:
- replacing respectively source IP address and port indicated in the received packet by LAN IP address and port of the home nodeB; and
- replacing respectively destination IP address and port indicated in the received packet by LAN IP address and port of the device;
forwarding the modified IP packet to the LAN.

14. Processing module (70) according to any one of claims 9 to 13, further comprising a forwarding unit (73) adapted to handle modification of received packets on uplink as follows:
based on the second table, selecting the associated bearer,
discarding said received packets if no bearer can be selected;
otherwise, based on initial and second tables, obtaining a modified IP packet by:
- replacing source IP address by IP address of the home NodeB on the core network (IP_{CN,HNB}) for said given bearer,
- replacing source IP port by core network IP port of the home NodeB;
- replacing destination IP address by core network IP address of the remote terminal;
- replacing destination IP Port by core network IP port of the remote terminal;
forwarding the modified IP packet to the core network.

15. Home NodeB (101) for handling a communication between a terminal (100) of a mobile network and a device (108,109) of a LAN network (107), said home NodeB comprising a processing module (70) according to any one of claims 9 to 14.

16. Terminal (1000) in a mobile network adapted to communicate with a device (108,109) of a LAN network (107),
the mobile network having a core network (105) and a home network (106) including a home NodeB (101);
said LAN network being linked to the home network via said home Node B;
the terminal being a remote terminal from the home network;
said terminal comprising:
- an associating unit (1010) adapted to obtain :
o at least one core network IP address and one IP port of the home NodeB (IP_{CN, HNB,}Port _{CN,HNB}); and
o a service description provided by the corresponding said LAN device; and
- a memory (1011) adapted to store in a first table an association of the LAN IP address and port of the device with said core network IP port of the home NodeB.

17. System for handling a communication between a terminal (1000) of a mobile network and a device (108,109) of a LAN network (107), said home-NodeB comprising a processing module (70) according to any one of claims 9 to 14 and a terminal according to claim 16.

## Patentansprüche

1. Verfahren zur Abwicklung einer Kommunikation zwischen einem Endgerät (1000) eines mobilen Netzwerks und einem Gerät (108, 109) eines LAN-Netzwerks (107),
wobei das mobile Netzwerk ein Kernnetzwerk (105) und ein Home-Netzwerk (106) einschließlich eines Home-NodeB (101) aufweist,
wobei das LAN-Netzwerk mit dem Home-Netzwerk über den Home-NodeB verbunden ist,
wobei das Endgerät ein von dem Home-Netzwerk entfernt liegendes Endgerät ist,
wobei Pakete in dem mobilen Netzwerk über mindestens einen Träger übertragen werden,
wobei das Verfahren die folgenden Schritte am Home-NodeB umfasst:
/a/ bei Aktivierung eines Trägers Beziehen (24) einer Kernnetzwerk-IP-Adresse des Home-NodeB (IP_{CN,HNB}), die für den Träger vorgesehen ist,
/b/ Beziehen einer LAN-IP-Adresse für den Träger (IP_{LAN}, _{HNB}),
/c/ Speichern einer Zuordnung des Trägers, der Kernnetzwerk-IP-Adresse, die im Schritt /a/ erhalten wurde, und der LAN-IP-Adresse, die im Schritt /b/ erhalten wurde, in einer Ausgangstabelle (Tabelle 0).

2. Verfahren zur Abwicklung einer Kommunikation nach Anspruch 1, ferner die folgenden Schritte umfassend:
/1/ Beziehen einer LAN-IP-Adresse und eines LAN-IP-Ports des mindestens einen Gerätes (IP_{LAN,Gerät}, Port_{LAN,Gerät}),
/2/ Beziehen mindestens eines Kernnetzwerk-IP-Ports des Home-NodeB (Port_{CN,HNB}),
/3/ Speichern einer Zuordnung der LAN-IP-Adresse und des Ports des Gerätes mit dem Kernnetzwerk-IP-Port des Home-NodeB in einer ersten Tabelle (Tabelle 1).

3. Verfahren zur Abwicklung einer Kommunikation nach Anspruch 2, wobei das LAN-Netzwerk (107) mehrere Geräte (108, 109) umfasst und wobei der Home-NodeB (101) die erste Tabelle handhabt, welche die Zuordnung der nachfolgenden Informationen pro Gerät im LAN speichert:
- Kernnetzwerk-IP-Port des Home-NodeB, und
- LAN-IP-Adresse und Port des Gerätes,
wobei der Kernnetzwerk-IP-Port der LAN-IP-Adresse des Gerätes auf einer Eins-zu-eins-Basis zugeordnet ist.

4. Verfahren zur Abwicklung einer Kommunikation nach Anspruch 2 oder 3, wobei die erste Tabelle dynamisch auf der Grundlage der Zulassung von Geräten zum Home-NodeB (101) gehandhabt wird.

5. Verfahren zur Abwicklung einer Kommunikation nach einem der Ansprüche 2 bis 4, wobei beim Empfang eines ersten Pakets eines Paketstroms auf der Abwärtsverbindung die folgenden Informationen in einer zweiten Tabelle gespeichert werden:
- eine Kennzeichnung eines zugeordneten Trägers, auf dem das Paket empfangen wird,
- ein Ziel-IP-Port, der in dem empfangenen Paket angezeigt ist, wie in der ersten Tabelle gespeichert ist,
- eine LAN-IP-Adresse, die dem Träger zugewiesen ist, wie in der Ausgangstabelle gespeichert ist,
- ein LAN-IP-Port, der für den Home-NodeB erzeugt wurde,
- die LAN-IP-Adresse des Gerätes, das dem LAN-IP-Port des Home-NodeB zugeordnet ist, wie in der ersten Tabelle gespeichert ist,
- der LAN-IP-Port des Gerätes, das dem LAN-IP-Port des Home-NodeB zugeordnet ist, wie in der ersten Tabelle gespeichert ist,
- die Quellen-IP-Adresse, die im empfangenen Paket angezeigt ist, entsprechend der Kernnetzwerk-IP-Adresse des entfernt liegenden Endgerätes und
- der Quellen-IP-Port, der im empfangenen Paket angezeigt ist, entsprechend dem Kernnetzwerk-IP-Port des entfernt liegenden Endgerätes.

6. Verfahren zur Abwicklung einer Kommunikation nach Anspruch 5, wobei die folgenden Schritte auf jedes IP-Paket angewendet werden, das im Paketstrom auf der Abwärtsverbindung empfangen wurde:
- Beziehen eines modifizierten IP-Pakets auf der Grundlage der zweiten Tabelle durch:
∘ Ersetzen der jeweiligen Quellen-IP-Adresse und des Ports, die in dem empfangenen Paket angezeigt sind, durch die LAN-IP-Adresse und den Port des Home-NodeB und
∘ Ersetzen der jeweiligen Ziel-IP-Adresse und des Ports, die in dem empfangenen Paket angezeigt sind, durch die LAN-IP-Adresse und den Port des Gerätes,
- Weiterleiten des modifizierten IP-Pakets an das LAN.

7. Verfahren zur Abwicklung einer Kommunikation nach einem der vorhergehenden Ansprüche, wobei beim Empfang eines IP-Pakets auf der Aufwärtsverbindung die folgenden Schritte ausgeführt werden:
- Auswählen des zugeordneten Trägers auf Grundlage der zweiten Tabelle,
- Streichen des IP-Pakets, wenn kein Träger ausgewählt werden kann,
- anderenfalls Beziehen eines modifizierten IP-Pakets auf Grundlage der Anfangs- und der zweiten Tabelle durch:
o Ersetzen der Quellen-IP-Adresse durch die IP-Adresse des Home-NodeB auf dem Kernnetzwerk (IP_{CN},_{HNB}) für den gegebenen Träger,
∘ Ersetzen des Quellen-IP-Ports durch den Kernnetzwerk-IP-Port des Home-NodeB,
∘ Ersetzen der Ziel-IP-Adresse durch die Kernnetzwerk-IP-Adresse des entfernt liegenden Endgerätes,
∘ Ersetzen des Ziel-IP-Ports durch den Kernnetzwerk-IP-Port des entfernt liegenden Endgerätes,
Weiterleiten des modifizierten IP-Pakets an das Kernnetzwerk in dem zugeordneten Träger.

8. Verfahren zur Abwicklung einer Kommunikation nach einem der vorhergehenden Ansprüche, wobei das entfernt liegende Endgerät durch das Kernnetzwerk im Voraus authentifiziert wurde.

9. Verarbeitungsmodul (70), das geeignet ist, in ein Home-NodeB einbezogen zu werden, um eine Kommunikation zwischen einem Endgerät (1000) eines mobilen Netzwerks und einem Gerät (108, 109) eines LAN-Netzwerks (107) abzuwickeln,
wobei das mobile Netzwerk ein Kernnetzwerk (105) und ein Home-Netzwerk (106) einschließlich eines Home-NodeB (101) umfasst,
wobei das LAN-Netzwerk mit dem Home-Netzwerk über den Home-NodeB verbunden ist,
wobei das Endgerät ein von dem Home-Netzwerk entfernt liegendes Endgerät ist,
wobei das Verarbeitungsmodul aufweist:
- eine Zuordnungseinheit (71), die geeignet ist, um:
bei Aktivierung eines Trägers eine Kernnetzwerk-IP-Adresse (IP_{CN},_{HNB}) des Home-NodeB, die für den Träger vorgesehen ist, zu beziehen (24),
eine LAN-IP-Adresse für den Träger (IP_{LAN,HNB}) zu beziehen und
- einen Speicher, der geeignet ist, in einer Ausgangstabelle (Tabelle 0) eine Zuordnung des Trägers, der Kernnetzwerk-IP-Adresse und der LAN-IP-Adresse, die durch die Zuordnungseinheit erhalten wurde, zu speichern.

10. Verarbeitungsmodul (70) nach Anspruch 9, wobei die Zuordnungseinheit ferner geeignet ist zum:
- Beziehen einer LAN-IP-Adresse und eines LAN-IP-Ports von mindestens dem Gerät (IPL_{AN,}Ge_{rät}, Port_{LAN, Gerät}),
- Beziehen mindestens eines Kernnetzwerk-IP-Ports des Home-NodeB (Port_{CN,HNB}),
und der Speicher geeignet ist, in einer ersten Tabelle (Tabelle 1) eine Zuordnung der LAN-IP-Adresse und des Ports des Gerätes zum Kernnetzwerk-IP-Port des Home-NodeB zu speichern.

11. Verarbeitungsmodul (70) nach Anspruch 9 oder 10, wobei das LAN-Netzwerk mehrere Geräte aufweist, wobei die Zuordnungseinheit (71) die Kernnetzwerk-IP-Ports des Home-NodeB für LAN-IP-Adressen von Geräten auf einer Eins-zu-eins-Basis bezieht, und
wobei der Speicher (72) in der ersten Tabelle die Zuordnung der nachfolgenden Informationen pro Gerät im LAN speichert:
- Kernnetzwerk-IP-Port des Home-NodeB, und
- LAN-IP-Adresse sowie Port des Gerätes.

12. Verarbeitungsmodul (70) nach einem der Ansprüche 9 bis 11, wobei in dem mobilen Netzwerk über entsprechende Träger Pakete übertragen werden, wobei die Zuordnungseinheit geeignet ist, die folgenden Informationen zu beziehen, und der Speicher geeignet ist, beim Empfang eines ersten Pakets eines Paketstroms auf der Abwärtsverbindung eine zweite Tabelle zu verwalten, um die Informationen zu speichern:
- eine Kennzeichnung eines Trägers, auf dem das Paket empfangen wird,
- ein Ziel-IP-Port, der in dem empfangenen Paket angezeigt ist, wie in der ersten Tabelle gespeichert ist,
- eine LAN-IP-Adresse, die dem Träger zugewiesen ist, wie in der Ausgangstabelle gespeichert ist,
- ein LAN-IP-Port, der für den Home-NodeB erzeugt wurde,
- die LAN-IP-Adresse des Gerätes, das dem LAN-IP-Port des Home-NodeB zugeordnet ist, wie in der ersten Tabelle gespeichert ist,
- der LAN-IP-Port des Gerätes, das dem LAN-IP-Port des Home-NodeB zugeordnet ist, wie in der ersten Tabelle gespeichert ist,
- die Quellen-IP-Adresse, die im empfangenen Paket angezeigt ist, entsprechend der Kernnetzwerk-IP-Adresse des entfernt liegenden Endgerätes und
- der Quellen-IP-Port, der im empfangenen Paket angezeigt ist, entsprechend dem Kernnetzwerk-IP-Port des entfernt liegenden Endgerätes.

13. Verarbeitungsmodul (70) nach einem der Ansprüche 9 bis 12, ferner eine Weiterleitungseinheit (73) umfassend, die geeignet ist, eine Modifizierung der auf der Aufwärtsverbindung empfangenen Pakete wie folgt zu handhaben:
Beziehen eines modifizierten IP-Pakets auf der Grundlage der Anfangs-, ersten und zweiten Tabelle durch:
- Ersetzen der jeweiligen Quellen-IP-Adresse und des Ports, die in dem empfangenen Paket angezeigt sind, durch die LAN-IP-Adresse und den Port des Home-NodeB und
- Ersetzen der jeweiligen Ziel-IP-Adresse und des Ports, die in dem empfangenen Paket angezeigt sind, durch die LAN-IP-Adresse und den Port des Gerätes,
Weiterleiten des modifizierten IP-Pakets an das LAN.

14. Verarbeitungsmodul (70) nach einem der Ansprüche 9 bis 13, ferner eine Weiterleitungseinheit (73) umfassend, die geeignet ist, eine Modifizierung der auf der Aufwärtsverbindung empfangenen Pakete wie folgt zu handhaben:
Auswählen des zugeordneten Trägers auf Grundlage der zweiten Tabelle,
Streichen der empfangenen Pakete, wenn kein Träger ausgewählt werden kann,
anderenfalls Beziehen eines modifizierten IP-Pakets auf Grundlage der Anfangs- und der zweiten Tabelle durch:
- Ersetzen der Quellen-IP-Adresse durch die IP-Adresse des Home-NodeB auf dem Kernnetzwerk (IP_{CN,HNB}) für den gegebenen Träger,
- Ersetzen des Quellen-IP-Ports durch den Kernnetzwerk-IP-Port des Home-NodeB,
- Ersetzen der Ziel-IP-Adresse durch die Kernnetzwerk-IP-Adresse des entfernt liegenden Endgerätes,
- Ersetzen des Ziel-IP-Ports durch den Kernnetzwerk-IP-Port des entfernt liegenden Endgerätes,
Weiterleiten des modifizierten IP-Pakets an das Kernnetzwerk.

15. Home-NodeB (101) zur Abwicklung einer Kommunikation zwischen einem Endgerät (100) eines mobilen Netzwerks und einem Gerät (108, 109) eines LAN-Netzwerks (107), wobei der Home-NodeB ein Verarbeitungsmodul (70) nach einem der Ansprüche 9 bis 14 aufweist.

16. Endgerät (1000) in einem mobilen Netzwerk, das geeignet ist, mit einem Gerät (108, 109) eines LAN-Netzwerks (107) zu kommunizieren,
wobei das mobile Netzwerk ein Kernnetzwerk (105) und
ein Home-Netzwerk (106) einschließlich eines Home-NodeB (101) aufweist,
wobei das LAN-Netzwerk mit dem Home-Netzwerk über den Home-NodeB verbunden ist,
wobei das Endgerät ein von dem Home-Netzwerk entfernt liegendes Endgerät ist,
wobei das Endgerät umfasst:
- eine Zuordnungseinheit (1010), die geeignet ist zum Beziehen von:
∘ mindestens einer Kernnetzwerk-IP-Adresse und eines IP-Port des Home-NodeB (IP_{CN,HNB}, Port_{CN, HNB}) und
∘ eine Dienstbeschreibung, die durch das entsprechende LAN-Gerät bereitgestellt wurde, und
- einen Speicher (1011), der geeignet ist, in einer ersten Tabelle eine Zuordnung der LAN-IP-Adresse und des Ports des Gerätes zum Kernnetzwerk-IP-Port des Home-NodeB zu speichern.

17. System zur Abwicklung einer Kommunikation zwischen einem Endgerät (1000) eines mobilen Netzwerks und einem Gerät (108, 109) eines LAN-Netzwerks (107), wobei der Home-NodeB ein Verarbeitungsmodul (70) nach einem der Ansprüche 9 bis 14 und ein Endgerät nach Anspruch 16 aufweist.

## Revendications

1. Procédé pour gérer une communication entre un terminal (1000) d'un réseau mobile et un dispositif (108, 109) d'un réseau LAN (107),
le réseau mobile comportant un réseau d'infrastructure (105) et un réseau domestique (106) comprenant un NoeudB domestique (101) ;
ledit réseau LAN étant lié au réseau domestique par l'intermédiaire dudit NoeudB domestique ;
le terminal étant un terminal distant du réseau domestique ;
des paquets étant transmis dans le réseau mobile par l'intermédiaire d'au moins une porteuse,
ledit procédé comprenant les étapes suivantes au NoeudB domestique :
a. sur activation d'une porteuse, l'obtention (24) d'une adresse IP de réseau d'infrastructure du NoeudB domestique dédié à ladite porteuse (IP_{CN, HNB}) ;
b. l'obtention d'une adresse IP de LAN pour ladite porteuse (IP_{LAN, HNB}) ;
c. le stockage, dans une table initiale (Table 0), d'une association de la porteuse, de l'adresse IP de réseau d'infrastructure obtenue à l'étape a et de l'adresse IP de LAN obtenue à l'étape b.

2. Procédé pour gérer une communication selon la revendication 1, comprenant en outre les étapes suivantes :
1. l'obtention d'une adresse IP de LAN et d'un port IP de LAN d'au moins ledit dispositif (IP_{LAN, device}, Port_{LAN, device}) ;
2. l'obtention d'au moins un port IP de réseau d'infrastructure du NoeudB domestique (Port_{CN, HNB}) ;
3. le stockage, dans une première table (Table 1), d'une association de l'adresse et du port IP de LAN du dispositif avec ledit port IP de réseau d'infrastructure du NoeudB domestique.

3. Procédé pour gérer une communication selon la revendication 2, dans lequel le réseau LAN (107) comprend une pluralité de dispositifs (108, 109) et dans lequel le NoeudB domestique (101) gère la première table stockant l'association d'informations suivantes pour chaque dispositif dans le LAN :
- le port IP de réseau d'infrastructure du NoeudB domestique ; et
- l'adresse et port IP de LAN dudit dispositif ;
dans lequel le port IP de réseau d'infrastructure est associé à l'adresse IP de LAN de dispositif selon une relation un à un.

4. Procédé pour gérer une communication selon la revendication 2 ou 3, dans lequel la première table est gérée dynamiquement en fonction de l'enregistrement de dispositifs auprès du NoeudB domestique (101).

5. Procédé pour gérer une communication selon l'une quelconque des revendications 2 à 4, dans lequel, sur réception d'un premier paquet d'un flux de paquets sur liaison descendante, les informations suivantes sont stockées dans une seconde table :
- un identifiant d'une porteuse associée sur laquelle le paquet est reçu ;
- un port IP de destination indiqué dans le paquet reçu, tel qu'il est stocké dans la première table ;
- une adresse IP de LAN attribuée pour ladite porteuse, telle qu'elle est stockée dans la table initiale ;
- un port IP de LAN généré pour le NoeudB domestique ;
- l'adresse IP de LAN du dispositif associé au port IP de LAN du NoeudB domestique, telle qu'elle est stockée dans la première table ;
- le port IP de LAN du dispositif associé au port IP de LAN du NoeudB domestique, tel qu'il est stocké dans la première table ;
- l'adresse IP source indiquée dans le paquet reçu, correspondant à l'adresse IP de réseau d'infrastructure du terminal distant ; et
- le port IP source indiqué dans le paquet reçu, correspondant au port IP de réseau d'infrastructure du terminal distant.

6. Procédé pour gérer une communication selon la revendication 5, dans lequel les étapes suivantes sont appliquées sur chaque paquet IP reçu dans le flux de paquets sur liaison descendante :
- en fonction de la seconde table, l'obtention d'un paquet IP modifié en :
-- remplaçant respectivement l'adresse et le port IP source dans le paquet reçu par l'adresse et le port IP de LAN du NoeudB domestique ; et
-- remplaçant respectivement l'adresse et le port IP de destination indiqués dans le paquet reçu par l'adresse et le port IP de LAN du dispositif ;
- l'acheminement du paquet IP modifié vers le LAN.

7. Procédé pour gérer une communication selon l'une quelconque des revendications précédentes, dans lequel, sur réception d'un paquet IP sur liaison montante, les étapes suivantes sont réalisées :
- en fonction de la seconde table, la sélection de la porteuse associée ;
- l'abandon dudit paquet IP si aucune porteuse ne peut être sélectionnée ;
- autrement, en fonction de la table initiale et de la seconde table, l'obtention d'un paquet IP modifié en :
-- remplaçant l'adresse IP source par l'adresse IP du NoeudB domestique sur le réseau d'infrastructure (IP_{CN, HNB}) pour ladite porteuse donnée,
-- remplaçant le port IP source par le port IP de réseau d'infrastructure du NoeudB domestique ;
-- remplaçant l'adresse IP de destination par l'adresse IP de réseau d'infrastructure du terminal distant ;
-- remplaçant le port IP de destination par le port IP de réseau d'infrastructure du terminal distant ;
- l'acheminement du paquet IP modifié vers le réseau d'infrastructure dans ladite porteuse associée.

8. Procédé pour gérer une communication selon l'une quelconque des revendications précédentes, dans lequel le terminal distant a préalablement été authentifié par le réseau d'infrastructure.

9. Module de traitement (70) adapté pour être inclus dans un NoeudB domestique afin de gérer une communication entre un terminal (1000) d'un réseau mobile et un dispositif (108, 109) d'un réseau LAN (107), le réseau mobile comportant un réseau d'infrastructure (105) et un réseau domestique (106) comprenant ledit NoeudB domestique (101) ;
ledit réseau LAN étant lié au réseau domestique par l'intermédiaire dudit NoeudB domestique ;
le terminal étant un terminal distant du réseau domestique ;
ledit module de traitement comprenant :
- une unité d'association (71) adaptée pour :
sur activation d'une porteuse, obtenir (24) une adresse IP de réseau d'infrastructure du NoeudB domestique dédié à ladite porteuse (IP_{CN, HNB}) ;
obtenir une adresse IP de LAN pour ladite porteuse (IP_{LAN, HNB}) ; et
- une mémoire adaptée pour stocker, dans une table initiale (Table 0), une association de la porteuse, de l'adresse IP de réseau d'infrastructure et de l'adresse IP de LAN obtenue par l'unité d'association.

10. Module de traitement (70) selon la revendication 9, dans lequel, l'unité d'association est en outre adaptée pour :
- obtenir une adresse IP de LAN et un port IP de LAN d'au moins ledit dispositif (IP_{LAN, device}, Port_{LAN, device}) ;
- obtenir au moins un port IP de réseau d'infrastructure du NoeudB domestique (Port_{CN, HNB}) ; et
la mémoire est adaptée pour stocker, dans une première table (Table 1), une association de l'adresse et du port IP de LAN du dispositif avec ledit port IP de réseau d'infrastructure du NoeudB domestique.

11. Module de traitement (70) selon la revendication 9 ou 10, dans lequel le réseau LAN comprenant une pluralité de dispositifs, l'unité d'association (71) obtient des ports IP de réseau d'infrastructure du NoeudB domestique pour des adresses IP de LAN de dispositifs selon une relation un à un ; et
la mémoire (72) stocke, dans la première table, l'association d'informations suivantes pour chaque dispositif dans le LAN :
- le port IP de réseau d'infrastructure du NoeudB domestique ; et
- l'adresse et port IP de LAN dudit dispositif.

12. Module de traitement (70) selon l'une quelconque des revendications 9 à 11, des paquets étant transmis dans le réseau mobile par l'intermédiaire de porteuses respectives, l'unité d'association est adaptée pour obtenir les informations suivantes et la mémoire est adaptée pour gérer une seconde table pour stocker lesdites informations, sur réception d'un premier paquet d'un flux de paquets sur liaison descendante :
- un identifiant d'une porteuse sur laquelle le paquet est reçu ;
- un port IP de destination indiqué dans le paquet reçu, tel qu'il est stocké dans la première table ;
- une adresse IP de LAN attribuée pour ladite porteuse, telle qu'elle est stockée dans la table initiale ;
- un port IP de LAN généré pour le NoeudB domestique ;
- l'adresse IP de LAN du dispositif associé au port IP de LAN du NoeudB domestique, telle qu'elle est stockée dans la première table ;
- le port IP de LAN du dispositif associé au port IP de LAN du NoeudB domestique, tel qu'il est stocké dans la première table ;
- l'adresse IP source indiquée dans le paquet reçu, correspondant à l'adresse IP de réseau d'infrastructure du terminal distant ; et
- le port IP source indiqué dans le paquet reçu, correspondant au port IP de réseau d'infrastructure du terminal distant.

13. Module de traitement (70) selon l'une quelconque des revendications 9 à 12, comprenant en outre une unité d'acheminement (73) adaptée pour gérer une modification de paquets reçus sur liaison descendante comme suit :
- en fonction de la table initiale, des première et seconde tables, l'obtention d'un paquet IP modifié en :
-- remplaçant respectivement l'adresse et le port IP source dans le paquet reçu par l'adresse et le port IP de LAN du NoeudB domestique ; et
-- remplaçant respectivement l'adresse et le port IP de destination indiqués dans le paquet reçu par l'adresse et le port IP de LAN du dispositif ;
- l'acheminement du paquet IP modifié vers le LAN.

14. Module de traitement (70) selon l'une quelconque des revendications 9 à 13, comprenant en outre une unité d'acheminement (73) adaptée pour gérer une modification de paquets reçus sur liaison montante comme suit :
- en fonction de la seconde table, la sélection de la porteuse associée,
- l'abandon desdits paquets reçus si aucune porteuse ne peut être sélectionnée ;
- autrement, en fonction de la table initiale et de la seconde table, l'obtention d'un paquet IP modifié en :
-- remplaçant l'adresse IP source par l'adresse IP du NoeudB domestique sur le réseau d'infrastructure (IP_{CN, HNB}) pour ladite porteuse donnée,
-- remplaçant le port IP source par le port IP de réseau d'infrastructure du NoeudB domestique ;
-- remplaçant l'adresse IP de destination par l'adresse IP de réseau d'infrastructure du terminal distant ;
-- remplaçant le port IP de destination par le port IP de réseau d'infrastructure du terminal distant ;
- l'acheminement du paquet IP modifié vers le réseau d'infrastructure.

15. NoeudB domestique (101) pour gérer une communication entre un terminal (100) d'un réseau mobile et un dispositif (108, 109) d'un réseau LAN (107), ledit NoeudB domestique comprenant un module de traitement (70) selon l'une quelconque des revendications 9 à 14.

16. Terminal (1000) dans un réseau mobile adapté pour communiquer avec un dispositif (108, 109) d'un réseau LAN (107),
le réseau mobile comportant un réseau d'infrastructure (105) et un réseau domestique (106) comprenant un NoeudB domestique (101) ;
ledit réseau LAN étant lié au réseau domestique par l'intermédiaire dudit NoeudB domestique ;
le terminal étant un terminal distant du réseau domestique ;
ledit terminal comprenant :
- une unité d'association (1010) adaptée pour obtenir :
-- au moins une adresse IP de réseau d'infrastructure et un port IP du NoeudB domestique (IP_{CN, HNB}, Port_{CN, HNB}), et
-- une description de service fournie par ledit dispositif LAN correspondant ; et
- une mémoire (1011) adaptée pour stocker, dans une première table, une association de l'adresse et du port IP de LAN du dispositif avec ledit port IP de réseau d'infrastructure du NoeudB domestique.

17. Système pour gérer une communication entre un terminal (1000) d'un réseau mobile et un dispositif (108, 109) d'un réseau LAN (107), ledit NoeudB domestique comprenant un module de traitement (70) selon l'une quelconque des revendications 9 à 14 et un terminal selon la revendication 16.
